# EUROPÄISCHE PATENTSCHRIFT

(11) **EP 1 832 153 B1**
(45) Veröffentlichungstag und Bekanntmachung des Hinweises auf die Patenterteilung: **15.06.2011**
(21) Anmeldenummer: 07004981.2
(22) Anmeldetag: 10.03.2007
(51) Int. Cl.: A01C 7/10, A01C 7/20, A01C 19/00

(54) **Sämaschine**
Seeder
Semoir

(30) Priorität: 10.03.2006 DE 102006011197
(43) Veröffentlichungstag der Anmeldung: 12.09.2007
(73) Patentinhaber: Rabe Agri GmbH, 49152 Bad Essen (DE)
(72) Erfinder: Gehrke, Rudolf, Dipl.-Ing., 49152 Bad Essen (DE)
(74) Vertreter: Tappe, Hartmut

(56) Entgegenhaltungen:
- DE-C- 239 923
- DE-U1- 9 214 315
- US-A- 2 053 794
- US-A- 2 053 795

## Beschreibung

Die Erfindung betrifft eine Sämaschine mit den Merkmalen des Anspruchs 1.

Aus dem Stand der Technik sind zahlreiche Einstellvorrichtungen an Sämaschinen bekannt. Diese Einstellvorrichtungen, auch Bedienungselemente genannt, sind an verschiedenen Stellen an der Sämaschine angeordnet. So ist in der Regel bei Sämaschinen mit einem quer zur Arbeitsrichtung angeordneten Saatgutbehälter auf der einen Seite die Getriebeeinstellvorrichtung angeordnet und auf der gegenüberliegenden Seite des Saatgutbehälters ist die Bodenklappeneinstellvorrichtung angeordnet. Die Schardruckeinstellvorrichtung wird häufig in der Nähe der Dreipunktkuppelvorrichtung angeordnet.

Eine derartige Sämaschine ist bereits durch DE-OS 2 310 805 bekannt. Bei dieser Sämaschine weist die zentrale Einstellvorrichtung eine quer zur Arbeitsrichtung angeordnete Welle mit starren Belastungsarmen auf. Zwischen den Belastungsarmen und den Schararmen sind Druckfedern angeordnet. Die Verstellung der Federkraft der Druckfedern erfolgt mittels einer Stellschraube, die über einen Belastungsarm mit der quer verlaufenden Welle verbunden ist. Eine weitere Einstellvorrichtung für die Schare ist in DE-GM 78 25 061 beschrieben. Die beschriebene Einstellvorrichtung ist zentral fernbedienbar und mittels Anschläge ist die gewünschte Federkraft für die Säschare vorwählbar.

Eine Einstellvorrichtung für die Bodenklappen ist aus DE-GM 92 14 315 bekannt. Der Bodenklappenstellhebel ist verdrehfest mit der Bodenklappenwelle verbunden. Fixiert wird der Bodenklappenstellhebel mittels eines Raststiftes in einer Lochleiste. Je nach Stellung des Raststiftes in der Lochleiste wird der Abstand zwischen dem Särad und der Bodenklappe festgelegt.

Aus der Gebrauchsmusterschrift DE 299 07 696 U1 ist eine Getriebeeinstellvorrichtung bekannt. Der Einstellhebel ist mittels eines Bolzens im Getriebegehäuse verschwenkbar gelagert und mit der daran angeordneten Einstellvorrichtung wird im Getriebe die Drehzahl der Dosierräder eingestellt.

Aus der US 2,053,794 ist eine Sämaschine bekannt, die aus einem Rahmen mit Laufrädern und einem Saatgutbehälter mit einer einstellbaren Sävorrichtung gebildet ist. Am Rahmen sind Säscharen in der Höhe schwenkbar angeordnet, wobei die Säscharen über einstellbare Federelemente mit dem Rahmen verbunden sind, und mit einer als Hebel ausgebildeten Schardruckeinstellvorrichtung gekoppelt sind. Weiter sind zwei Getriebe der Sävorrichtung mit voneinander unabhängigen Getriebeeinstellvorrichtungen auf beiden Seiten der Sämaschine vorgesehen.

Da die genannten Einstellvorrichtungen an verschiedenen Stellen der Sämaschine angeordnet sind, ist eine derartige Sämaschine nicht sehr bedienerfreundlich. Nachteilig ist auch, dass die Einstellvorrichtung für den Schardruck im Bereich der Dreipunktkuppelvorrichtung angeordnet ist, besonders dann, wenn die Sämaschine mit einem vorlaufenden Bodenbearbeitungsgerät kombiniert wird. Zur Verstellung der Einstellvorrichtung muss der Bediener dann zwischen das Bodenbearbeitungsgerät und die Sämaschine treten. Möglicherweie ist der Freiraum zwischen beiden Geräten so eng, insbesondere bei einer auf dem Bodenbearbeitungsgerät aufgebauten Sämaschine, dass der Bediener auf das Bodenbearbeitungsgerät steigen muss, wobei die Unfallgefahr durch Abrutschen steigt.

Besonders nachteilig wirkt sich die Anordnung der Einstellvorrichtung aus, wenn sich diese an der rechten Seite der Sämaschine befindet. Der Bediener muss dann entweder um den Schlepper oder um die Sämaschine herumlaufen, weil er bei modernen Schleppern nur noch auf der linken Seite vom Schlepper absteigen kann.

Da die Abdrehkurbel für das manuelle Antreiben des Getriebes vorgesehen ist sowie auch häufig für die Verstellung der Schardruckeinstellvorrichtung, wird die Abdrehkurbel in der Nähe des Getriebes geparkt. Zur Verstellung des Schardruckes muss der Bediener dann die Abdrehkurbel aus der Parkposition holen und zur Schardruckeinstellvorrichtung bringen. Nach dem Einstellvorgang muss die Abdrehkurbel wieder in die Parkposition gebracht werden. Diese Vorgänge sind zeitaufwändig und es besteht dabei eine erhebliche Unfallgefahr.

Der Erfindung liegt die Aufgabe zugrunde, eine verbesserte Sämaschine vorzuschlagen, die die Nachteile des Standes der Technik vermeidet und in vorteilhafter Weise mindestens die Getriebeeinstellvorrichtung, die Bodenklappeneinstellvorrichtung und die Schardruckeinstellvorrichtung auf der linken Seite der Sämaschine als Einstellzentrum aufweist.

Diese Aufgabe wird erfindungsgemäß nach den Merkmalen des Patentanspruches 1 gelöst, wobei die weiteren Patentansprüche in vorteilhafter Weise ergänzende Lösungen zeigen.

Die erfindungsgemäße Sämaschine weist einen Rahmen mit einem Saatgutbehälter auf, wobei die Säschare am Rahmen angeordnet sind. Abgestützt wird die Sämaschine auf dem Boden entweder von einem Laufrad oder mehreren Laufrädern. Es ist auch möglich, den Rahmen der Sämaschine derart zu gestalten, dass sich die Sämaschine auf einer Bodenwalze und/oder einem Bodenbearbeitungsgerät abstützt.

Die für den Betrieb der Sämaschine wichtigsten Einstellvorrichtungen sind in Arbeitsrichtung auf der linken Seite der Sämaschine angeordnet. Das vom Laufrad angetriebene Getriebe für die Sävorrichtung weist eine Getriebeeinstellvorrichtung auf. Mit dem Getriebestellhebel wird die Drehzahl des Särades eingestellt und somit auch die auszusäende Aussaatmenge pro Flächeneinheit. Die Getriebeeinstellvorrichtung kann auch derart gestaltet werden, dass die Saatmenge fernbedient veränderlich ist und die Getriebeeinstellung oder die Aussaatmenge dem Bediener visuell angezeigt wird.

Die Bodenklappe unter dem Särad der Sävorrichtung dichtet den Saatgutbehälter zum Särad ab. Die Bodenklappe ist mit der Bodenklappenwelle drehfest verbunden und die Bodenklappenwelle wiederum mit dem Bodenklappenstellhebel. Der Bodenklappenstellhebel ist ein Teil der Bodenklappeneinstellvorrichtung. Mit der Bodenklappeneinstellvorrichtung wird je nach Saatgutkörnung der Spalt zwischen dem Särad und der Bodenklappe zentral eingestellt. Zum Entleeren des Saatgutbehälters wird der Spalt zwischen dem Särad und der Bodenklappe so weit vergrößert, dass das Saatgut aus dem Saatgutbehälter ausläuft.

Mit der Schardruckeinstellvorrichtung wird die Bodeneindringtiefe der Säschare eingestellt. Je nach Bodenwiderstand und Saatgutart muss die Eindringtiefe der Säschare eingestellt werden. In der Regel wird der Schardruck mittels einer Verstellspindel eingestellt. Bei unterschiedlichen Böden mit wechselndem Bodenwiderstand wird eine fernverstellbare Schardruckeinstellvorrichtung bevorzugt. Zur Verstellung wird dazu in der Regel ein Linearmotor in Form eines Hydraulikzylinders verwendet. Es ist aber auch möglich, eine andere Bauart von Linearmotor zu verwenden. Zur Überwachung der Eindringtiefe des Säschares bzw. der Stellung des Linearmotors ist eine visuelle Anzeige für den Bediener vorgesehen, so dass der Bediener die Saatablagetiefe gegebenenfalls vom Schlepper aus korrigieren kann.

Zur vorteilhaften Verbesserung der Sämaschine sind im Einstellzentrum Ablagemöglichkeiten für die Abdrehkurbel, die Einstellwerkzeuge und die Aussaathilfsmittel vorgesehen. Zu den Aussaathilfsmitteln gehören Saatreduziereinsätze für die Säräder zur Aussaat von geringen Aussaatmengen und/oder Wechselräder für den Antrieb sowie ein Saatmengen-Rechner und/oder eine Wiegeeinrichtung für die Abdrehprobe.

Weitere Einzelheiten der Erfindung sind den Unteransprüchen, der Beispielbeschreibung und den Zeichnungen zu entnehmen. Hierzu zeigen die nachfolgenden Zeichnungen:

**Fig. 1** eine erfindungsgemäße Sämaschine in einer Teilansicht und in perspektiver Darstellung

**Fig. 2** die Sävorrichtung in vergrößerter Darstellung und in perspektiver Ansicht

**Fig. 3** eine Sämaschine auf einer Bodenwalze abstützend in der Seitenansicht

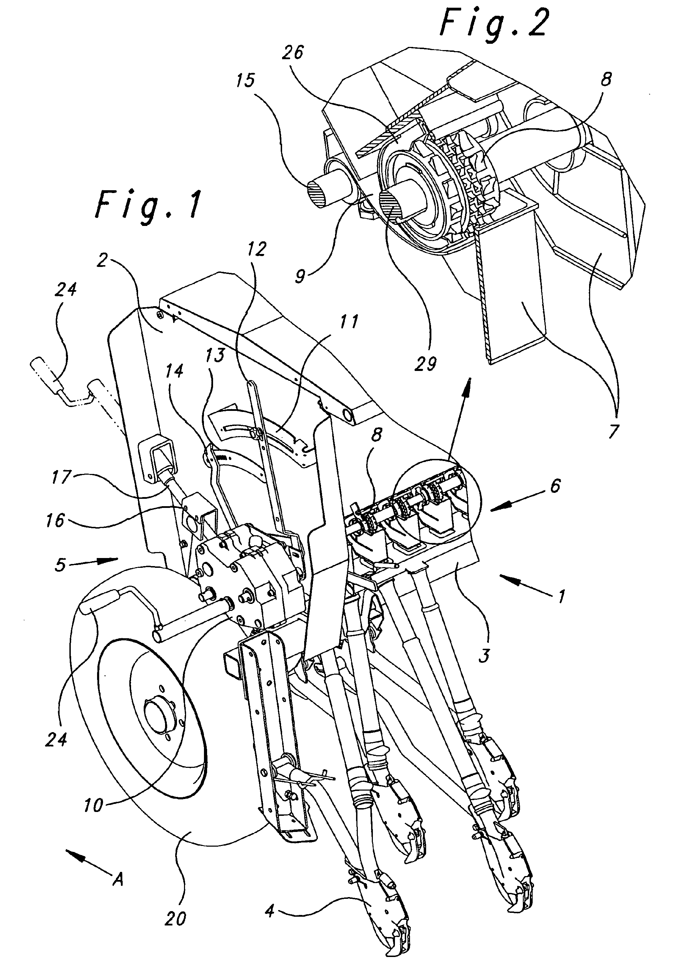

**Fig. 1** stellt eine auf Laufrädern **20** abgestützte Sämaschine **1** dar. Am Rahmen **3** sind die Säschare **4** nebeneinander beabstandet angeordnet und oberhalb der Säschare **4** ist der Saatgutbehälter **2** mit dem Einstellzentrum **5,** dem Getriebe **10** und der Sävorrichtung **6** angeordnet. Das Einstellzentrum **5** und das Getriebe **10** befinden sich dabei in Arbeitsrichtung **A** auf der linken Seite der Sämaschine **1.** Am Getriebe **10** ist die Getriebeeinstellvorrichtung **11** mit dem im Getriebe **10** drehbar gelagerten Getriebestellhebel **12** angeordnet. Zur Änderung der Übersetzung zwischen dem Laufrad **20** und den Särädern **8** wird der Getriebestellhebel **12** verschwenkt und zum Festlegen einer konstanten Ausbringmenge pro Flächeneinheit wird der Getriebestellhebel **12** in der Getriebeeinstellvorrichtung **11** fixiert. Zum Durchführen einer Abdrehprobe wird die Abdrehkurbel **24** auf das Getriebe **10** aufgesteckt. Durch das Drehen der Abdrehkurbel **24** mit einer bestimmten Anzahl an Kurbelumdrehungen und das gleichzeitige Auffangen des Saatgutes unter den Särädern **8** ermittelt der Bediener die Aussaatmenge für eine bestimmte Aussaatfläche.

Zur Verstellung des Druckes an den Säscharen **4** wird mittels der Abdrehkurbel **24** die Verstellspindel **17** der Schardruckeinstellvorrichtung **16** verdreht.

Mit dem Bodenklappenstellhebel **14** der Bodenklappeneinstellvorrichtung **13** wird der Abstand der Bodenklappe **9** zum Särad **8** verändert, wie in **Fig. 2** dargestellt. Die mit dem Bodenklappenstellhebel **14** drehfest verbundene Bodenklappenwelle **15** stützt sich im Sägehäuse 7 ab. Zwischen der elastischen Bodenklappe **9** und der Bodenklappenwelle 15 besteht ebenfalls eine verdrehfeste Verbindung. Oberhalb der Bodenklappe **9** weist die Sävorrichtung **6** die Säwelle **29** mit dem Särad **8** auf, wobei die mit dem Getriebe **10** in Verbindung stehende Säwelle **29** im Sägehäuse gelagert ist. Zur Reduzierung der Aussaatmenge beim Ausbringen von Feinsaatgut weist die Sävorrichtung **6** einen Saatreduziereinsatz **26** auf. Es besteht aber auch die Möglichkeit, das Särad **8** durch ein nicht dargestelltes Särad mit einzeln zu schaltbaren Teilsärädern zu ersetzen.

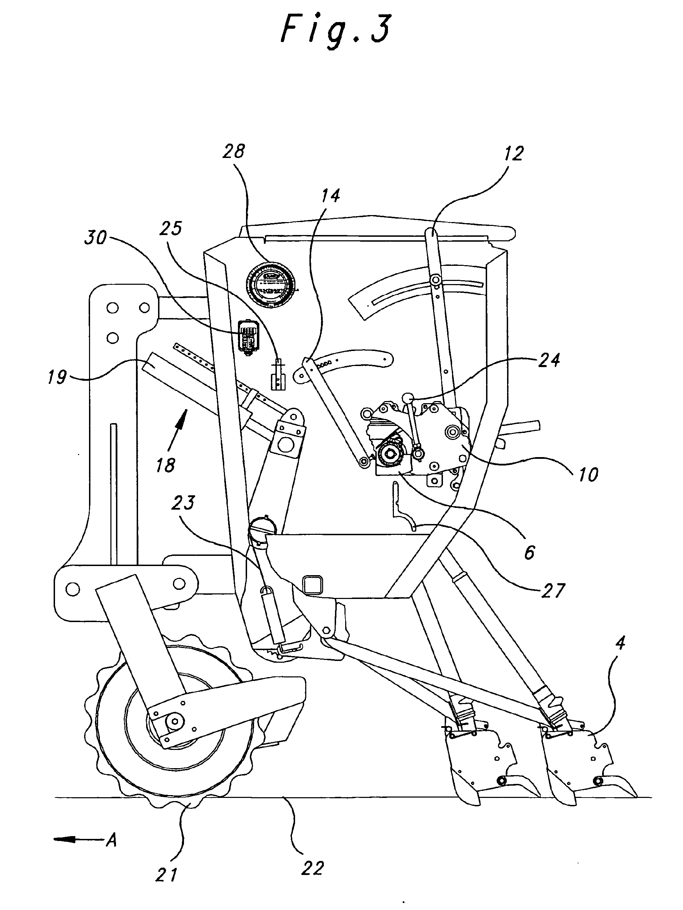

Eine weitere Sämaschine **1** zeigt die **Fig. 3****.** Diese Sämaschine **1** stützt sich auf der Bodenwalze **21** ab. Die Säschare **4** drücken dabei mittels Federelemente **23** in den zu bearbeitenden Boden **22.** Zum Spannen der Federelemente **23** fährt der Linearmotor **18** der Schardruckeinstellvorrichtung **16** aus. Es besteht auch die Möglichkeit, den Hydraulikzylinder **19** im Stellbereich zu begrenzen sowie diesen durch eine andere Art von Linearmotor **18** zu ersetzen.

Zur Aufbewahrung der Abdrehkurbel **24** befindet sich am Saatgutbehälter **2** eine Halterung. Auch das Einstellelement **27** zum Justieren des Abstandes der Bodenklappe **9** zum Särad **8** ist an der linken Seite des Saatgutbehälters **2** abnehmbar angeordnet. Mit dem vorzugsweise abnehmbaren und gegen Verschmutzen geschützten Saatmengen-Rechner **28** ermittelt der Bediener die Einstellung des Getriebes **10** für die auszubringende Saatmenge pro Flächeineinheit. Zur Vereinfachung der Abdrehprobe besteht die Möglichkeit, eine Zählvorrichtung **30** anzuordnen, welche die Kurbelumdrehungen am Getriebe **10** zählt und dem Bediener die Anzahl der Kurbelumdrehungen anzeigt sowie das Ende des Abdrehvorganges akustisch mitteilt. Die Zählvorrichtung **30** und der Saatmengen-Rechner **28** können auch Bestandteil einer nicht dargestellten abnehmbaren Bedieneinheit sein, die sowohl auf dem Schlepper angeordnet sein kann, als auch an der Sämaschine **(1)** anbringbar ist.

### Bezugszeichenliste

- 1: Sämaschine
- 2: Saatgutbehälter
- 3: Rahmen
- 4: Säschar
- 5: Einstellzentrum
- 6: Sävorrichtung
- 7: Sägehäuse
- 8: Särad
- 9: Bodenklappe
- 10: Getriebe
- 11: Getriebeeinstellvorrichtung
- 12: Getriebestellhebel
- 13: Bodenklappeneinstellvorrichtung
- 14: Bodenklappenstellhebel
- 15: Bodenklappenwelle
- 16: Schardruckeinstellvorrichtung
- 17: Verstellspindel
- 18: Linearmotor
- 19: Hydraulikzylinder
- 20: Laufrad
- 21: Bodenwalze
- 22: Boden
- 23: Federelement
- 24: Abdrehkurbel
- 25: Halterung
- 26: Saatreduziereinsatz
- 27: Einstellelement
- 28: Saatmengen-Rechner
- 29: Säwelle
- 30: Zählvorrichtung

- A: Arbeitsrichtung

## Patentansprüche

1. Sämaschine **(1)** mit einem Rahmen **(3),** der über Laufräder **(20)** oder mittels einer Bodenwalze **(21)** am Boden **(22)** abgestützt ist, einem Saatgutbehälter **(2)** mit einer einstellbaren Sävorrichtung **(6),** die über ein Getriebe **(10)** mit Getriebeeinstellvorrichtung **(11)** und Bodenklappen **(9)** mit Bodenklappeneinstellvorrichtung **(13)** einstellbar ist, mit am Rahmen **(3)** in der Höhe schwenkbar angeordneten Säscharen **(4),** die jeweils mit dem Rahmen **(3)** über Federelemente **(23)** verbunden sind, deren Vorspannung einzeln oder mit Hilfe einer zentralen Schardruckeinstellvorrichtung **(16)** veränderbar ist, wobei in der Arbeitsrichtung **(A)** der Sämaschine **(1)** auf der linken Seite ein Einstellzentrum **(5)** angeordnet ist, das mindestens die Getriebeeinstellvorrichtung **(11),** eine Bodenklappeneinstellvorrichtung **(13)** und die Schardruckeinstellvorrichtung **(16)** aufweist, **dadurch gekennzeichnet, dass** die Bodenklappeneinstellvorrichtung (13) so ausgebildet ist, dass ein Abstand der Bodenklappe (9) zu einem Sährad (8) der Sähvorrichtung (6) einstellbar ist.

2. Sämaschine **(1)** nach Anspruch 1, **dadurch gekennzeichnet, dass** die Getriebeeinstellvorrichtung **(11),** die Bodenklappeneinstellvorrichtung (13) und die Schardruckeinstellvorrichtung **(16)** manuell einstellbar sind.

3. Sämaschine **(1)** nach Anspruch 1 und 2, **dadurch gekennzeichnet, dass** die Getriebeeinstellvorrichtung **(11),** die Bodenklappeneinstellvorrichtung **(13)** und/ oder die Schardruckeinstellvorrichtung **(16)** fernbedienbar sind.

4. Sämaschine **(1)** nach einem oder mehreren der vorgenannten Anspruche, **dadurch gekennzeichnet, dass** die Getriebeeinstellvorrichtung **(11)** und die Schardruckeinstellvorrichtung **(16)** einzeln und / oder gemeinsam fernbedienbar sind.

5. Sämaschine **(1)** nach einem oder mehreren der vorgenannten Ansprüche, **dadurch gekennzeichnet, dass** die Abdrehkurbel **(24)** bei der Nichtbenutzung auf der linken Seite der Sämaschine **(1)** aufbewahrt wird.

6. Sämaschine **(1)** nach einem oder mehreren der vorgenannten Ansprüche, **dadurch gekennzeichnet, dass** nichtbenutzte Funktionselemente wie Saatreduziereinsätze **(26)** und/oder Einstellelemente **(27)** auf der linken Seite der Sämaschine **(1)** aufbewahrt werden.

7. Sämaschine **(1)** nach einem oder mehreren der vorgenannten Ansprüche, **dadurch gekennzeichnet, dass** in der Nähe des Getriebes **(10)** ein Saatmengen-Rechner **(28)** angeordnet ist, der vorzugsweise abnehmbar gestaltet ist.

## Claims

1. A seeder (1) with a frame (3) which is supported on the ground (2) via running wheels (20) or by means of a ground roller (21), a seat container (2) with an adjustable sowing device (6) which is adjustable via a gear (10) with gear adjusting device (11) and ground flaps (9) with ground flap adjusting device (13), with seed shares (4) arranged on the frame (3) pivotable in height, each of which is connected to the frame (3) via spring elements (23) whose preload can be changed individually or over the help of a central share pressure adjusting device (16), wherein in the working direction (A) of the seeder (1) on the left side an adjusting centre (5) is arranged, which at least comprises the gear adjusting device (11), a ground flap adjusting device (13) and the share pressure adjusting device (16), **characterized in that** the ground flap adjusting device (13) is designed so that a spacing of the ground flap (5) to a sowing wheel (8) of the sowing device (6) is adjustable.

2. The seeder (1) according to Claim 1, **characterized in that** the gear adjusting device (11), the ground flap adjusting device (13) and the share pressure adjusting device (16) are manually adjustable.

3. The seeder (1) according to Claim 1 and 2, **characterized in that** the gear adjusting device (11), the ground flap adjusting device (13) and/or the share pressure adjusting device (16) are remotely controllable.

4. The seeder (1) according to any one or several of the preceding Claims, **characterized in that** the gear adjusting device (11) and the share pressure adjusting device (16) are individually and/or jointly remotely controllable.

5. The seeder (1) according to any one or several of the preceding Claims, **characterized in that** the turning-down crank (24) upon non-use is kept on the left side of the seeder (1).

6. The seeder (1) according to any one or several of the preceding Claims, **characterized in that** non-used function elements such as seed reducing inserts (26) and/or adjusting elements (27) are kept on the left side of the seeder (1).

7. The seeder (1) according to any one or several of the preceding Claims, **characterized in that** near the gear (10) a seed quantity computer (28) is arranged, which is preferentially of a removable design.

## Revendications

1. Semoir (1) comprenant un châssis (3), qui est soutenu sur le sol (22) au moyen de roues mobiles (20) ou au moyen d'un rouleau pour le sol (21), un réservoir pour semence (2) avec un dispositif à semer (6) réglable, qui peut être réglé au moyen d'un engrenage (10) avec dispositif de réglage d'engrenage (11) et trappes (9) avec dispositif de réglage de trappes (13), avec des socs de semoir (4) disposés sur le châssis (3) de façon à pouvoir basculer en hauteur, qui sont reliés respectivement au châssis (3) au moyen d'éléments de ressort (23), dont la pré-tension peut être modifiée individuellement ou à l'aide d'un dispositif central de réglage de pression de soc (16), un centre de réglage (5) étant disposé dans le sens de travail (A) du semoir (1) sur le coté gauche, lequel centre présente au moins le dispositif de réglage d'engrenage (11), un dispositif de réglage de trappe (13) et le dispositif de réglage de pression de soc (16), **caractérisé en ce que** le dispositif de réglage de trappe (13) est conçu de telle sorte qu'une distance entre la trappe (9) et une roue de semoir (8) du dispositif à semer (6) est réglable.

2. Semoir (1) selon la revendication 1, **caractérisé en ce que** le dispositif de réglage d'engrenage (11), le dispositif de réglage de trappe (13) et le dispositif de réglage de pression de soc (16) sont réglables manuellement.

3. Semoir (1) selon les revendications 1 et 2, **caractérisé en ce que** le dispositif de réglage d'engrenage (11), le dispositif de réglage de trappe (13) et/ou le dispositif de réglage de pression de soc (16) peuvent être commandés à distance.

4. Semoir (1) selon l'une quelconque ou plusieurs des revendications précédentes, **caractérisé en ce que** le dispositif de réglage d'engrenage (11) et le dispositif de réglage de pression de soc (16) peuvent être télécommandés individuellement et/ou conjointement.

5. Semoir (1) selon l'une quelconque ou plusieurs des revendications précédentes, **caractérisé en ce que** la manivelle de rotation (24) est conservée sur le côté gauche du semoir (1) si elle n'est pas utilisée.

6. Semoir (1) selon l'une quelconque ou plusieurs des revendications précédentes, **caractérisé en ce que** des éléments de fonction non utilisés tels que des inserts de réduction de semence (26) et/ou des éléments de réglage (27) sont conservés sur le côté gauche du semoir (1) .

7. Semoir (1) selon l'une quelconque ou plusieurs des revendications précédentes, **caractérisé en ce qu'**un calculateur de quantités de semence (28), qui est disposé de préférence de façon amovible, est disposé à proximité de l'engrenage (10).
